Europäisches Patentamt

European Patent Office

Office européen des brevets

(19)

(11) EP 0 879 447 B1

(12) EUROPÄISCHE PATENTSCHRIFT

(45) Veröffentlichungstag und Bekanntmachung des Hinweises auf die Patenterteilung:
17.11.1999 Patentblatt 1999/46

(51) Int Cl.6: G05B 13/02

(21) Anmeldenummer: 97914132.2

(86) Internationale Anmeldenummer:
PCT/DE97/00242

(22) Anmeldetag: 07.02.1997

(87) Internationale Veröffentlichungsnummer:
WO 97/29411 (14.08.1997 Gazette 1997/35)

(54) **VERFAHREN ZUR ERZEUGUNG DER REGLERPARAMETER AUS EINEM ANTWORTSIGNAL EINER REGELSTRECKE DURCH EINEN RECHNER**

PROCESS FOR GENERATING CONTROL PARAMETERS FROM A RESPONSE SIGNAL OF A CONTROLLED SYSTEM USING A COMPUTER

PROCEDE D'OBTENTION DE PARAMETRES DE REGLAGE A PARTIR D'UN SIGNAL DE REPONSE D'UN SYSTEME COMMANDE AU MOYEN D'UN CALCULATEUR

(84) Benannte Vertragsstaaten:
AT CH DE ES FR GB LI

(30) Priorität: 09.02.1996 DE 19604793

(43) Veröffentlichungstag der Anmeldung:
25.11.1998 Patentblatt 1998/48

(73) Patentinhaber: SIEMENS AKTIENGESELLSCHAFT
80333 München (DE)

(72) Erfinder: WEINZIERL, Klaus
D-81671 München (DE)

(56) Entgegenhaltungen:
EP-A- 0 520 233          WO-A-93/12476

- JOURNAL OF GUIDANCE AND CONTROL AND DYNAMICS, Bd. 16, Nr. 2, 1.März 1993, Seiten 330-336, XP000382121 HORTA L G ET AL: "FREQUENCY-WEIGHTED SYSTEM IDENTIFICATION AND LINEAR QUADRATIC CONTROLLER DESIGN"
- POWER CONVERSION AND INTELLIGENT MOTION, Bd. 20, Nr. 8, August 1994, USA, Seiten 76-82, XP000672317 S.MESHKAT: "TIME AND FREQUENCY DOMAIN SYSTEM ANALYSIS"
- J.JOURNAL, Bd. 8, Nr. 5, Oktober 1986, UK, Seiten 250-255, XP000674044 B.BRANDIN ET AL: "A METHOD FOR THE IDENTIFICATION OF SYSTEM MODES"
- IDENTIFIKATION DYNAMISCHER SYSTEME, 1989, Seiten 81-113, XP000672399 "FOURIER ANALYSE MIT NICHTPERIODISCHEN TESTSIGNALEN" in der Anmeldung erwähnt

**Beschreibung**

PID-Regler sind bekannt (1). Sie werden in der Verfahrenstechnik häufig verwendet. Dazu müssen die Regler berechnet werden, um die zugeordnete Regelstrecke regeln zu können. In der Verfahrenstechnik sind in der Regel keine Modelle der Regelstrecke zur Reglerberechnung verfügbar. Zur Einstellung eines PID-Reglers wird häufig eine Identifikation durchgeführt, die z. B. offline auf der Basis einer gemessenen Sprungantwort erfolgen kann. Dabei sucht man aus einer gegebenen Menge von Modellen der Regelstrecken das jeweils passende Modell mit den dazugehörigen Modellparametern. Auf dessen Grundlage kann ein geeigneter PID-Regler berechnet werden.

Zweckmäßig wäre es, wenn der Identifikationsschritt und die Reglerberechnung zu einem einzigen Schritt zusammengefaßt werden könnte. Hierdurch würde eine wohl definierte Abbildung von der Sprungantwort auf die gesuchten Reglerparameter entstehen. Um den dabei entstehenden Aufwand zu minimieren, ist eine Approximation derselben durch ein neuronales Netz naheliegend. Steht ein solches fertig trainiertes neuronales Netz zur Verfügung, so können geeignete Reglerparameter unmittelbar dadurch gefunden werden, daß man von einer gegebenen technischen Anlage zunächst die Sprungantwort der Regelstrekke aufnimmt und sodann dem neuronalen Netz als Eingang zur Verfügung stellt. Die Ausgaben des neuronalen Netzes sind die gesuchten Reglerparameter.

Zum Training des neuronalen Netzes können Regelstrecken vorgegeben werden, für welche die dazugehörigen Reglerparameter unmittelbar bekannt sind. Als Grundlage für das Training des neuronalen Netzes kann z. B. ein Expertensystem zur Einstellung von PID-Reglern oder eine anderweitig ermittelte Bibliothek passender Reglerparameter verwendet werden. Diese Einrichtung zum Training kann z.B. Lehrer genannt werden. Die Ausgabe des neuronalen Netzes wird mit der des Lehrers verglichen und die Netzgewichte im Sinne einer Verringerung des Ausgabefehlers des neuronalen Netzes nachgeführt. Dies geschieht für eine Vielzahl verschiedener vorgegebener Streckenmodelle, bis der Fehler bei allen Beispielen ausreichend klein ist. Neuronale Netze, die diesen Anforderungen genügen, sind z. B. aus (2) bekannt. Eine weitere Lösung ist aus [5] bekannt. Dort werden die Reglerparameter direkt aus den Zeitsignalen mit Hilfe des neuronalen Netzes ermittelt. Derartige Netze müssen in der Regel sehr groß sein, sind schwer zu trainieren und die abgegebenen Reglerparameter sind nicht zuverlässig.

Aus [6] ist eine Einrichtung zur Parameterindikation einer Übertragungsstrecke bekannt, bei der mit Hilfe eines Simulationsmodells geschätzte Ausgangssignale mit gemessenen Ausgangssignalen verglichen werden. Für optimale Parameter werden Abweichungen minimiert.

Im folgenden wird statt von Sprungantwort der Regelstrecke von Antwortsignal der Regelstrecke gesprochen.

Die der Erfindung zugrundeliegende Aufgabe besteht darin, ein Verfahren anzugeben, nach dem auch aus einem gestörten Antwortsignal Kennlinien des Bodediagramms erzeugt werden, die von der Störung weitgehend unbeeinflußt sind. Es ist weiterhin eine Aufgabe, ein System zur adaptiven Einstellung eines PID-Reglers mit Hilfe eines neuronalen Netzes anzugeben, bei der die vom neuronalen Netz abgegebenen Reglerparameter auch bei Vorliegen eines gestörten Antwortsignals eine einwandfreie Reglereinstellung gewährleisten. Diese Aufgabe wird mit einem Verfahren gemäß den Merkmalen des Anspruchs 1,2 oder 3 gelöst.

Systeme zur adaptiven Einstellung eines PID-Reglers mit Hilfe eines neuronalen Netzes unter Verwendung der Verfahren ergeben sich aus den Ansprüchen 17-19.

Erfindungsgemäß werden die Reglerparameter durch das neuronale Netz nicht direkt aus der Sprungantwort ermittelt, sondern zuvor die Frequenzkennlinien der Strecke aus der Sprungantwort berechnet. Dem neuronalen Netz werden dann Eingangswerte zugeführt, die aus den Frequenzkennlinien Strecke berechnet werden. Als Vorteil können sehr viel kleinere Netze verwendet werden, die mit höherer Zuverlässigkeit gute Reglerparameter abgeben.

Verfahren zur Berechnung der Frequenzkennlinien der Strecke aus einer abgegebenen Sprungantwort sind z. B. aus [3] und [4] bekannt. Diese sind jedoch dann problematisch, wenn die Sprungantwort mit Störungssignalen überlagert ist. Wenn eine solche gestörte Sprungantwort zur Berechnung der Frequenzkennlinien verwendet wird, die das neuronale Netz ansteuern, so kann es immer noch sein, daß die vom neuronalen Netz erzeugten Reglerparameter ungeeignet sind. Die in [3] und [4] beschriebenen Maßnahmen zur Glättung der Sprungantwort erfordern entweder mehrere Messungen oder sind nicht ausreichend, um die gewünschte Zuverlässigkeit zu erreichen. Aus diesem Grund wird in der Erfindung auch ein neuartiges Glättungsverfahren beschrieben, das die Berechnung der Frequenzkennlinien der Strecke aus einer einzigen gestörten Messung erlaubt.

Somit erhält das neuronale Netz nicht unmittelbar aus der Sprungantwort gebildete Merkmale als Eingangsgrößen, sondern es wird eine Vorverarbeitung der Sprungantwort durchgeführt. Diese Vorverarbeitung umfaßt eine Glättung und Differentiation der Sprungantwort und eine sich daran anschließende Fouriertransformation, welche zu einer Matrixmultiplikation mit einer komplexwertigen Matrix zugesammengefaßt werden können. Die so gewonnenen Daten werden in Form eines Bodediagramms aufgetragen. Anschließend werden die gefundenen Frequenzkennlinien, d. h. die Betragskennlinie bezüglich der Amplitude und der Frequenz und die Phasenkennlinie bezüglich der Frequenz normiert. Diese Normierung besitzt im Bodediagramm die Wirkung einer einfachen Verschiebung der Frequenzkennlinien. Als Normierungsgröße dient diejenige Frequenz, bei der die Phasenkennlinie den Wert -100° annimmt, und der dazugehörige Betrag der Betragskennlinie. Das neuronale Netz muß dadurch nur noch normierte Reglerparameter für normierte Strecken lernen, wodurch sich eine Vereinfachung ergibt. Aus den verbleibenden normierten Frequenzkennlinien werden nun Kenngrößen als Eingangsgrößen für das neuronale Netz gebildet. Die Ausgangsgrößen des Netzes stellen die normierten Reglerparameter des FID-Reglers dar. Durch Entnormierung erhält man schließlich die gesuchten Reglerparameter.

Zur Gewinnung von Frequenzgängen aus einer Sprungantwort einer linearen Regelstrecke sind mehrere Verfahren bekannt. Hier muß hingewiesen werden auf die Fast Fourier Transformation (FFT) oder die diskrete Fourier Transformation (DFT). Eine weitere praktikable Methode ist die Approximation der Sprungantwort durch einen Polygonzug und die Transformation in den Frequenzbereich mittels elementarer Korrespondenzen, wie sie z. B. in (3, 4) beschrieben ist. Die unmittelbare Anwendung dieser Methoden bei einer gestörten Sprungantwort ist in der Regel jedoch nicht ausreichend zur Ermittlung der Reglerparameter. In diesem Fall ist eine oft zeitaufwendige Anregung der Regelstrecke durch mehrfache Sprünge, Impulse oder durch stochastische Signale empfehlenswert, welche aber in der Verfahrenstechnik selten möglich ist.

Um mit Hilfe einer einzigen, auch gestörten Sprungantwort ausreichend aussagekräftige Frequenzkennlinien im Bodediagramm zum Entwurf eines PID-Reglers zu erhalten, wird nun erfindungsgemäß die Sprungantwort zunächst geglättet, wobei zur Glättung die Tatsache ausgenützt wird, daß zur Bestimmung eines Punktes der geglätteten Kurve die Sprungantwort im gesamten Verlauf zur Verfügung steht. Nach der Glättung kann die Sprungantwort differenziert werden, wodurch man eine Schätzung der Streckenimpulsantwort erhält. Die geschätzte Impulsantwort stellt nun die Grundlage für eine Bestimmung der Frequenzkennlinien der Regelstrecke sinngemäß zu den in (3, 4) vorgestellten Verfahren dar. Diese Methode liefert auch bei kräftigen Störungen der Sprungantwort noch gute Resultate. Die beiden genannten Operationen lassen sich in Matrixschreibweise formulieren und zu einer einzigen Matrixmultiplikation mit einer komplexwertigen Matrix zusammenfassen.

Bisher ist das Verfahren unter Verwendung einer Sprungantwort beschrieben worden. Dies ist jedoch nicht erforderlich, da das Verfahren auch einwandfrei arbeitet, wenn ein beliebiges Antwortsignal einer Regelstrecke herangezogen wird.

Dabei gibt es zwei Möglichkeiten zur Erzeugung der Frequenzkennlinien bei einem geschlossenen Regelkreis. Bei der ersten Möglichkeit kann das Eingangssignal und das Antwortsignal herangezogen werden. Beide werden wie zuvor die Sprungantwort zunächst geglättet und dann fouriertransformiert. Auf die Differentiation kann hier verzichtet werden, sie hat auf das Ergebnis keinen Einfluß. Es entstehen jetzt zwei Frequenzkennlinien, eine für das Eingangssignal und eine für das Antwortsignal. Die Differenz der beiden Frequenzkennlinien im Bodediagramm ergibt den gesuchten Frequenzgang der Strecke. Diese Möglichkeit ist in [3] und [4] ebenfalls beschrieben.

Bei der zweiten Möglichkeit wird die geglättete Impulsantwort der Strecke durch Entfaltung des Antwortsignals bezüglich des Eingangssignals berechnet. Diese Entfaltungsoperation hängt vom Eingangssignal ab. Ist das Eingangssignal sprungförmig, so ist die Entfaltungsoperation identisch mit einer Glättung und anschließenden Differentiation. Die zweite Methode stellt also eine Verallgemeinerung des Glättungsverfahrens hin zu einer glättenden Entfaltung dar.

Andere Weiterbildungen der Erfindung ergeben sich aus den abhängigen Ansprüchen.

Anhand eines Ausführungsbeispieles, das in den Figuren dargestellt ist, wird die Erfindung weiter erläutert. Dabei wird das Verfahren anhand der Erzeugung von Reglerparametern für einen PID-Regler dargestellt, ohne daß die Erfindung auf dieses Ausführungsbeispiel beschränkt wäre.

Es zeigen

Fig. 1      ein Blockschaltbild des Systems,
Fig. 2      eine ausführlichere Darstellung eines Teils des Systems,
Fig. 3      das System bei offenen Regelkreis,
Fig. 4a     das System bei geschlossenen Regelkreis mit erster Methode,
Fig. 4b     das System bei geschlossenen Regelkreis mit der Entfaltungsmethode,
Fig. 5      eine gestörte Sprungantwort,
Fig. 6      der Verlauf der Betragskennlinie,
Fig. 7      der Verlauf der Phasenkennlinie.

Die weitere Darstellung erfolgt wieder unter Verwendung der Sprungantwort, die von der Regelstrecke bei Anliegen eines Sprungsignales abgegeben wird.

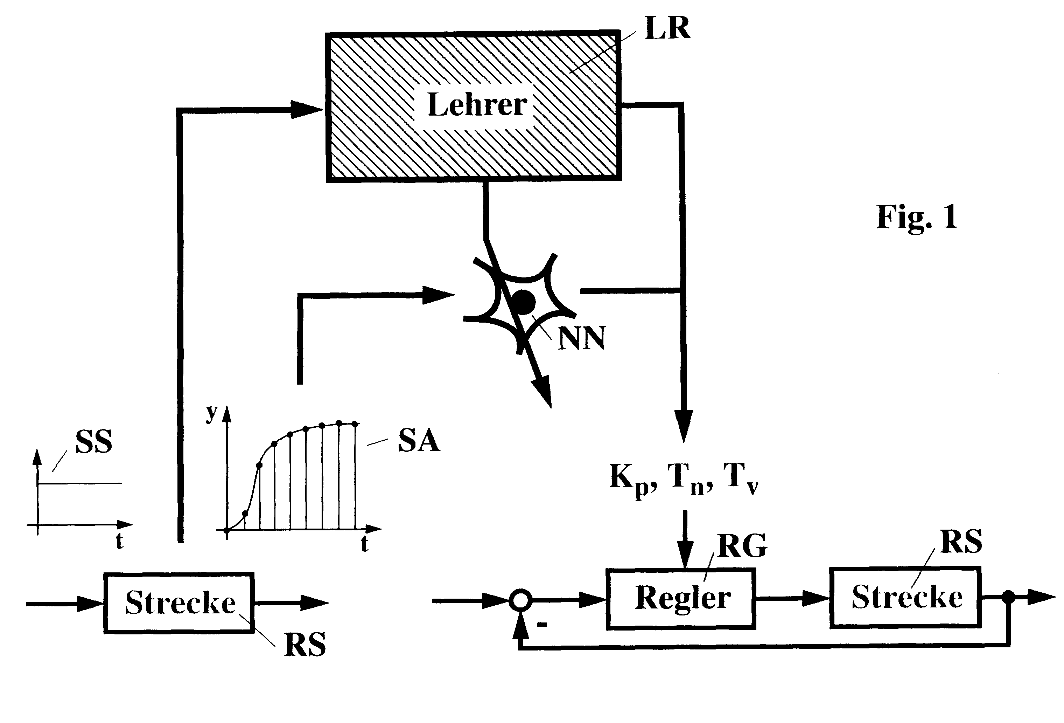

Aus Figur 1 ergibt sich der Aufbau eines Regelkreises, bestehend aus einer Regelstrecke RS und einem Regler RG. Es soll sich um einen PID-Regler RG handeln. Die Regelstrecke RS ist noch einmal symbolisch dargestellt, hier wird bei der Erfindung ein Sprungsignal SS zugeführt, sie erzeugt aufgrund des Sprungsignales eine Sprungantwort SA, deren Amplitude y über der Zeit t aufgetragen dargestellt ist. Bevor ein neuronales Netz NN Parameter Kp, Tn, Tv zur Einstellung des Reglers RG erzeugen kann, muß es vorher trainiert werden. Tn ist dabei die Nachstellzeit, Tv die Vorhaltezeit und Kp der Proportionalfaktor (1).

Das Trainieren des neuronalen Netzes NN erfolgt mit Hilfe eines Lehrers LR, der nach einer der oben angegebenen Methoden die Gewichte des neuronalen Netzes so einstellt, daß die vom Lehrer LR und dem neuronalen Netz aufgrund einer Sprungantwort abgegebenen Werte näherungsweise identisch werden. Dazu muß dem neuronalen Netz NN für eine große Anzahl verschiedener Strecken die Sprungantwort SA zugeführt werden. Dem Lehrer LR werden meist unmittelbar die Streckenparameter zugeführt. Es können aber auch andere Größen zur eindeutigen Charakterisierung der Strecke verarbeitet werden. Solange die Werte des neuronalen Netzes NN von denen des Lehrers abweichen, verstellt der Lehrer die Gewichte des neuronalen Netzes NN, bis keine weitere Verringerung der Abweichung mehr möglich ist. Das Training des neuronalen Netzes NN ist nicht Gegenstand der vorliegenden Erfindung, sie kann auf bekannte Art erfolgen.

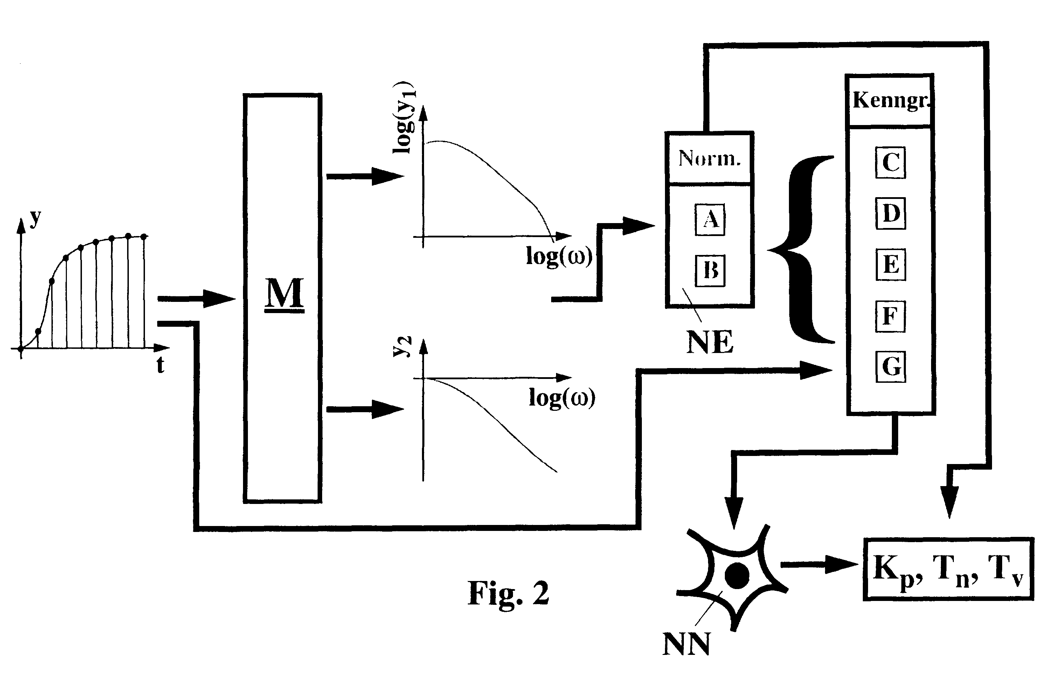

Eine ausführlichere Darstellung des Systems ergibt sich aus der Figur 2. Die Sprungantwort SA wird zu verschiedenen Zeiten, den Abtastzeiten $T_1, T_2 \cdots T_q$, abgetastet und die zu diesen Zeitpunkten vorliegenden Amplitudenwerte y einem Mittel zur Glättung und Fouriertransformation M zugeführt. Diese führt in einem Schritt die erfindungsgemäße Glättung der Sprungantwort SA durch und erzeugt aus der geglätteten Sprungantwort nach den bei (3, 4) angegebenen Verfahren die Amplitudenkennlinie y1 und die Phasenkennlinie y2. Die beiden Kennlinien des Bodediagramms sind in Figur 2 in Abhängigkeit der Frequenz ω dargestellt. Die beiden Kennlinien werden normiert in einer Normierungseinheit NE, aus den normierten Kennlinien werden Kenngrößen, z. B. C,D,E,F gebildet, die als Eingangsgrößen dem neuronalen Netz NN zugeführt werden. Die Kenngröße G wird direkt aus der Srungantwort berechnet und ebenfalls dem neuronalen Netz NN zugeführt. Aufgrund dieser Eingangsgrößen erzeugt das neuronale Netz NN die Reglerparameter Kp, Tn, Tv. Diese Reglerparameter Kp, Tn, Tv, werden zur Einstellung des PID-Reglers verwendet, die derart ist, daß der Regelkreis einwandfrei arbeitet.

Nachfolgend wird zunächst erläutert, wie aus der gestörten Sprungantwort SA eine geglättete Sprungantwort erzeugt wird. Dabei wird die Kenntnis ausgenützt, daß sich die Sprungantwort einer gegebenen Regelstrecke im Normalfall zeitlich relativ träge ändert. Rasche Änderungen sind mit hoher Wahrscheinlichkeit auf Störsignale zurückzuführen. Zur vereinfachten Darstellung der Erfindung werden im folgenden q äquidistante Stützstellen der gemessenen Sprungantwort y(t) unterstellt, d. h.

$$y[n]=y(nT), \ n=0,1,\ldots,q\text{-}1$$

Dabei ist T die Abtastzeit. Man kann nun das zeitdiskrete Signal y(n) zu einem Vektor zusammenfassen

$$\underline{y} = \begin{bmatrix} y[0] \\ y[1] \\ \vdots \\ y[q-1] \end{bmatrix} \qquad\qquad (1)$$

Weiterhin wird die (q x q) Summationsmatrix eingeführt,

$$\underline{A} := \frac{200}{q-1} \begin{bmatrix} 1 & 0 & \cdots & 0 \\ 1 & 1 & \cdots & 0 \\ \vdots & \vdots & \cdots & \vdots \\ 1 & 1 & \ldots & 1 \end{bmatrix} \qquad\qquad (2)$$

durch welche z. B. mit $\underline{A}\underline{y}$ eine akkumulierende Summation der Komponenten von $\underline{y}$ ausgedrückt werden kann. Diese stellt eine von vielen möglichen Approximationen des Integrationsoperators

$$A\{y\} := \frac{200}{(q-1)T} \begin{bmatrix} \int\limits_{0}^{0} y(T)dT \\ \int\limits_{0}^{T} y(T)dT \\ \vdots \\ \int\limits_{0}^{(q-1)T} y(T)dT \end{bmatrix} \tag{2a}$$

dar Zum Vektor $\underline{y}$ wird nun ein geglätteter Vektor $\underline{s}$ als Approximation gesucht. Hierzu wird die glättende Wirkung der akkumulierenden Summation ausgenützt, d. h. zunächst der Vektor $\underline{s}$ durch

$$\underline{s} = \underline{A}\underline{v} \tag{3}$$

$$\underline{v} = \underline{A}\underline{a} \tag{4}$$

ausgedrückt. Die Bedingung $\underline{s}=\underline{y}$ würde dann $\underline{A}^2\underline{a} = \underline{y}$ bedeuten, wodurch die Rauhigkeit in $\underline{y}$ bei $\underline{a}$ verstärkt erscheint. Es wird sodann angestrebt, die Gleichheit zwischen $\underline{s}$ und $\underline{y}$ approximativ herzustellen, wobei z. B. $\|\underline{a}\|$, oder mit einer geeignet vorgegebenen Diagonalmatrix $\underline{D}$ mit positiven Einträgen der Ausdruck $\underline{a}^T\underline{D}\underline{a}$ möglichst klein sein soll. Hierin liegt die Grundidee des Glättungsverfahrens. Zur Lösung wird die Energiefunktion

$$\varepsilon(\underline{a}) = k\left[ \left(\underline{y} - \underline{A}^2\underline{a}\right)^T\left(\underline{y} - \underline{A}^2\underline{a}\right) + \underline{a}^T\underline{D}\underline{a} \right] \tag{5}$$

    $k$ = Konstante z.B. $k = 0.5$

gebildet und minimiert. Dabei bewertet der erste Term die Abweichung der Approximation von der gemessenen Sprungantwort und der zweite Term die Rauhigkeit der Approximation. Durch Nullsetzen des Gradienten von $\varepsilon(a)$ errechnet man die Lösung

$$\underline{a} = \left[\underline{A}^{2T}\underline{A}^2 + \underline{D}\right]^{-1}\underline{A}^{2T}\underline{y} \tag{6}$$

und hieraus den Vektor $\underline{s}$ der geglätteten Sprungantwort gemäß den Gleichungen (3) und (4). Im Grenzfall $\underline{D}=0$ entsteht hieraus $\underline{s}=\underline{y}$, d. h. die glättende Wirkung verschwindet.

Die Störunterdrückung läßt sich noch verbessern, wenn man bei den Gleichungen (3) und (4) noch weitere Terme derselben Form mit aufnimmt und die Energiefunktion Gleichung (5) diesbezüglich ergänzt. Vorteilhaft ist die folgende Energiefunktion

$$\varepsilon(\underline{b}) = k\left[ \left(\underline{y} - \underline{A}^4\underline{b}\right)^T\underline{D}_0\left(\underline{y} - \underline{A}^4\underline{b}\right) + \underline{v}^T\underline{D}_1\underline{v} + \underline{a}^T\underline{D}_2\underline{a} + \underline{r}^T\underline{D}_3\underline{r} + \underline{b}^T\underline{D}_4\underline{b} \right] \tag{7}$$

mit geeignet gewählten Diagonalmatrizen $\underline{D}_0, \underline{D}_1, \underline{D}_2, \underline{D}_3$ und $\underline{D}_4$ mit positiven Einträgen, wobei zu den Gleichungen (3) und (4) noch die folgenden Gleichungen (8) und (9)

$$\underline{a} = \underline{A}\underline{r} \tag{8}$$

$$\underline{r} = \underline{A}\,\underline{b} \tag{9}$$

hinzutreten. Die Matrix $\underline{D}_1$ wird dabei in der Regel zu $\underline{0}$ gesetzt.

Die Bedeutung des neuartigen Glättungsverfahrens für die nachfolgende Weiterverarbeitung liegt v.a. in der Möglichkeit, aus der gestörten Sprungantwort y(t) über den Vektor $\underline{v}$ unmittelbar auch eine gute, ausreichend glatte Schätzung für die Impulsantwort h(t)=ds(t)/dt mit

$$h(nT) = h[n] \cong {}^{v_{n+1}}/_{T(q-1)} \tag{10}$$

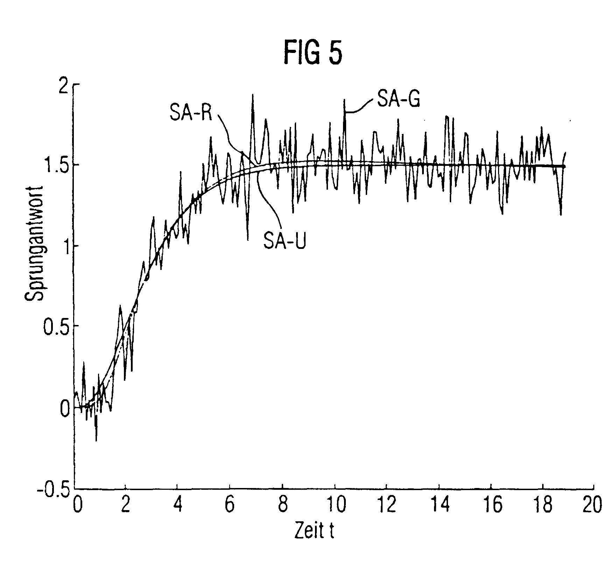

anzugeben, wobei $v_{n+1}$ die (n+1)-te Komponente von $\underline{v}$ und s(t) die exakte Sprungantwort SA-U ohne Störungen bezeichnen. Diese Verhältnisse ergeben sich aus Figur 5, die die gestörte Sprungantwort SA-G die ungestörte Sprungantwort SA-U und die geglättete Sprungantwort SA-R zeigt. Die Rekonstruktion der Impulsantwort kann mit

$$\underline{v} = \underline{V}\underline{y} \tag{11}$$

durch eine einfache Matrixmultiplikation mit einer festen Matrix an den Vektor $\underline{y}$ erfolgen, wobei $\underline{V}$ in beschriebener Weise durch Minimierung der Energiefunktion Gleichung (7), Einsetzen in die Gleichungen (9), (8) und (4), Auflösen nach $\underline{v}$ und Ausklammern von $\underline{y}$ bestimmt ist. Damit ergibt sich für $\underline{V}$

$$\underline{V} = \underline{A}^3\left[\underline{A}^{4T}\underline{D}_0\underline{A}^4 + \underline{A}^{3T}\underline{D}_1\underline{A}^3 + \underline{A}^{2T}\underline{D}_2\underline{A}^2 + \underline{A}^T\underline{D}_3\underline{A} + \underline{D}_4\right]^{-1}\underline{A}^{4T}\underline{D}_0 \tag{12}$$

Das beschriebene Verfahren kann nun ergänzt werden für den Fall, daß das Eingangssignal nicht sprungförmig ist. Dazu wird der Faltungsoperator

$$X\{v\} := \frac{200}{(q-1)T}\begin{bmatrix} \int\limits_0^0 x(t-\tau)v(\tau)d\tau \\ \int\limits_0^T x(t-\tau)v(\tau)d\tau \\ \vdots \\ \int\limits_0^{(q-1)T} y(t-\tau)v(\tau)d\tau \end{bmatrix} \tag{12a}$$

eingeführt. Im Unterschied zu A{v} bezeichnet X{v} einen Faltungsintegrationsoperator von v(t) mit dem Eingangssignal x(t). Hieraus kann genauso wie bei A{ } durch Approximation der Integration mit einer Summe eine Faltungsmatrix $\underline{X}$ gebildet werden.

Die Bestimmung der geglätteten Impulsantwort erfolgt nun nicht durch Minimierung der Energiefunktion G1 (7), sondern durch Minimierung der erweiterten Energiefunktion

$$\varepsilon(\underline{b}) = k\left(\left(\underline{y} - \underline{X}\,\underline{A}^3\,\underline{b}\right)^T \underline{D}_0\left(\underline{y} - \underline{X}\,\underline{A}^3\,\underline{b}\right) + \underline{v}^T \underline{D}_1\,\underline{v} + \underline{a}^T \underline{D}_2\,\underline{a} + \underline{r}^T \underline{D}_3\,\underline{r} + \underline{b}^T \underline{D}_4\,\underline{b}\right)$$

(12b)

Als Lösung erhält man jetzt

$$\underline{v} = \underline{V}\underline{y}$$ (12c)

mit

$$\underline{V} = \underline{A}^3\left(\underline{A}^{3T}\underline{X}^T\underline{D}_0\underline{X}\underline{A}^3 + \underline{A}^{3T}\underline{D}_1\underline{A}^3 + \underline{A}^{2T}\underline{D}_2\underline{A}^2 + \underline{A}^T\underline{D}_3\underline{A} + \underline{D}_4\right)^{-1}\underline{A}^{3T}\underline{X}^T\underline{D}_0$$ (12e)

Der die Impulsantwort charakterisierende Vektor läßt sich also ebenso wie im Fall der sprungförmigen Anregung durch eine gewöhnliche Matrixmultiplikation aus dem Vektor y des gemessenen Ausgangssignals bestimmen. Die Matrix $\underline{V}$ hängt allerdings jetzt vom Eingangssignal x(t) ab, weil die Matrix $\underline{X}$ vom vom Eingangssignal abhängt.

Die Berechnung des Bodediagramms aus der geglätteten Impulsantwort erfolgt sinngemäß nach den in **(3, 4)** vorgestellten Verfahren auf der Basis eines Polygonzuges für die Sprungantwort. Dies ist deshalb vorteilhaft, weil die Frequenzpunkte oft im logarithmischen Maßstab äquidistant liegen sollen. Allerdings wird bei dem eingesetzten Verfahren nur eine einzige Impulsantwort verwendet, allerdings nach vorausgegangener Glättung und Differentiation der von der Regelstrecke abgegebenen Sprungantwort. Dies ist in der Verfahrenstechnik notwendig, da die Aufnahme einer Sprungantwort z. B. bei chemischen Anlagen nicht selten mehrere Stunden in Anspruch nimmt und aus Sicherheitsgründen oft eine möglichst geringe Auslenkung der Strecke aus dem Betriebspunkt angestrebt wird, also eine Folge von mehreren Sprüngen oder eine hochfrequentere Anregung in vielen Fällen nicht möglich ist. Die Berechnung des Streckenfrequenzganges wird im Folgenden näher erläutert. Man erhält den gesuchten Frequenzgang H(jω), 0<ω<∞, durch Laplacetransformation der Impulsantwort h(t)=ds(t)/dt der Strecke, wobei die i. a. komplexwertige Laplacevariable s zu jω gesetzt wird. Als Approximation kann die Impulsantwort h(t) durch eine Treppenfunktion angenähert werden, wobei der v-te Rechteckblock (v=1,2, ..., q - 1) jeweils die Breite T und die Höhe h(v-1)=h((v-1)T)≅$v_v$/ T besitzt. Lediglich der letzte, q-te Block mit Höhe h[q-1] umfaßt das Zeitintervall ((q-1)T, ∞). Dies entspricht im Ergebnis dem in **(3, 4)** dargestellten Verfahren. Zur Erhöhung der Genauigkeit ist auch eine Approximation durch einen Polygonzug oder durch Splines möglich.

Die Frequenzgänge der einzelnen Rechteckblöcke lassen sich mittels elementarer Korrespondenzen [3,4] unmittelbar angeben. Bezeichnet $H_v$(jω) den Frequenzgang des auf Höhe 1 normierten v-ten Rechteckblocks, so erhält man als Approximation des gesuchten Frequenzganges H(jω) die Summe

$$H(j\omega) \cong \sum_{v=1}^{q} h[v-1]H_v(j\omega) \cong \frac{1}{(q-1)T}\sum_{v=1}^{q} v_v H_v(j\omega)$$ (13)

Wesentlich an der obigen Überlegung ist die Tatsache, daß bei festgehaltener Frequenz ω = $\omega_\mu$ in obiger Summe die Beiträge $H_v$(jω) jedes einzelnen auf Höhe 1 normierten Blocks durch je eine feste komplexe Zahl charakterisiert sind. Faßt man diese komplexen Zahlen zu einem Vektor zusammen, d.h.

$$\underline{h}_\mu = \begin{bmatrix} H_1(j\omega_\mu) \\ H_2(j\omega_\mu) \\ \vdots \\ H_q(j\omega_\mu) \end{bmatrix}$$ (14)

so erhält man

$$H(j\omega) \cong \frac{1}{(q-1)T} \, \underline{v}^T \underline{h}_\mu \tag{15}$$

oder bei mehreren, beliebigen Frequenzpunkten $\omega_1$, $\omega_2 \cdots \omega_m$ entsprechend

$$\left[ H(j\omega_1)H(j\omega_2)\cdots H(j\omega_m) \right] \cong \frac{1}{(q-1)T} \, \underline{v}^T \left[ \underline{h}_1 \, \underline{h}_2 \cdots \underline{h}_m \right] \tag{16}$$

Das bedeutet, daß man die Berechnung des Frequenzganges durch eine Matrixmultiplikation des Vektors $\underline{v}$ der Impulsantwort mit einer festen Matrix approximieren kann.

Dabei wird unterstellt, daß man nicht von den Abtastwerten der gemessenen Sprungantwort ausgeht, sondern vom bereits geglätteten Vektor $\underline{v}$ der Impulsantwort. Da auch beim Glättungsalgorithmus der Vektor $\underline{v}$ aus dem Vektor $\underline{y}$ der gemessenen Abtastwerte durch Multiplikation mit einer festen Matrix hervorgeht, können die beiden Matrixmultiplikationen zusammengefaßt werden, so daß durch die Glättung kein zusätzlicher Aufwand entsteht.

Man erhält dadurch in zusammenfassender Darstellung mit den Abkürzungen

$$\underline{f} = \begin{bmatrix} H(j\omega_1) \\ H(j\omega_2) \\ \vdots \\ H(j\omega_m) \end{bmatrix} \tag{17}$$

der Frequenztransformationsmatrix

$$\underline{H} := \left[ \underline{h}_1 \, \underline{h}_2 \cdots \underline{h}_m \right]^T \tag{18}$$

und der Glättungsmatrix $\underline{V}$ als Lösungsmatrix des zuvor beschriebenen Glättungsverfahrens die Lösung

$$\underline{f} \cong \frac{1}{(q-1)T} \, \underline{H}\underline{V}\underline{y} \tag{19}$$

als Approximation des Streckenfrequenzgangs unmittelbar aus dem Vektor $\underline{y}$ der gemessenen Abtastwerte der Streckensprungantwort.

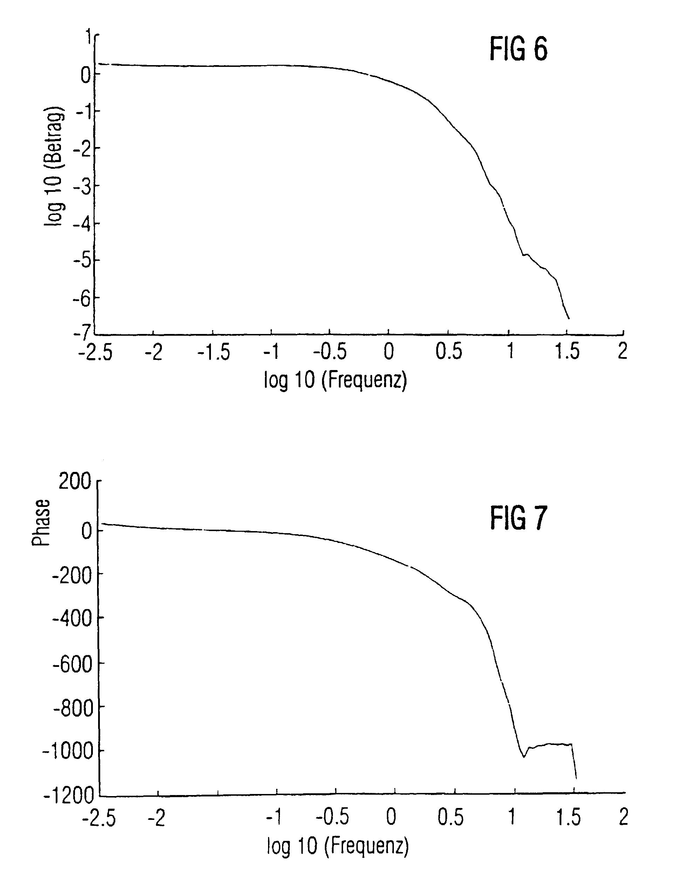

Die in Figur 6, 7 gezeigten Frequenzkennlinien lassen sich damit, wie bereits in der Einführung ausgeführt wurde, unmittelbar durch Matrixmultiplikationen des Vektors $\underline{y}$ mit einer festen, einmal vorab berechneten Matrix gewinnen.

Aus diesen Frequenzkennlinien Figur 6, Figur 7, lassen sich die normierten Werte auf folgende Weise gewinnen:

Es bezeichne $x = \log 10(\omega T)$ die logarithmische Frequenz, $b(x)$ die Betragskennlinie und $p(x)$ die Phasenkennlinie im Bodediagramm, siehe Figur 6, 7. Diese Funktionen werden nun zunächst geglättet, d. h. die Funktionen $\tilde{b}(x)$ und $\tilde{p}(x)$ gebildet. Es wird nun der Punkt $x_0$ mit

$$\tilde{p}(x_0) = -\phi_N$$

gesucht. $\phi_N$ ist dabei eine Konstante, z. B. $\phi_N = 100$. Das Merkmal B lautet damit

$$B = x_0$$

Das Merkmal A erhält man aus der Amplitudenkennlinie gemäß

$$A = \tilde{b}(x_0).$$

Man bildet nun die normierten Funktionen

$$b_N(x_N) := b(x_N + x_0) - A = b(x_N + B) - A \tag{20}$$

und

$$p_N(x_N) := p(x_N + x_0) = p(x_N + B) \tag{21}$$

Es werden drei weitere Kenngrößen berechnet, nämlich mit

$$f_c(x_N) = \frac{1}{90} \int_0^{x_N} p_N(\theta)d\theta - b_N(x_N) \tag{22}$$

$$C = f_c(0.16) - f_c(-0.84) \tag{23}$$

$$E = b_N(0) \tag{24}$$

$$F = p_N(0) + \phi_N \tag{25}$$

$$D = \log 10 \left( \int_{0.0244}^{25} 10^{2B_N(\theta)}d\theta \right) - 2E \tag{26}$$

wobei $B_N(\theta) := b_N(\log10(\theta))$

Das Merkmal G wird aus dem Antwortsignal y(t) durch Schätzung der Rauschamplitude berechnet, d. h. mit

$$y(t) = y_g(t) + n(t)r$$

$y_g$: geglättetes Antwortsignal

n(t) : Rauschen mit Signalleistung 1

r: Rauschamplitude

gilt näherungsweise

$$G = r$$

Dabei wird vorausgesetzt, daß das Eingangssignal die mittlere Signalleistung 1 besitzt. Ist die Signalleistung des Eingangssignals nicht 1, wird G durch die Wurzel der Signalleistung geteilt.

Das Merkmal C erlaubt die Unterscheidung minimalphasiger und nicht minimalphasiger Strecken. Das Merkmal D kann auch als spektrale Energie der Impulsantwort bezeichnet werden. Das Merkmal G dient dazu, bei gestörtem Antwortsignal vorsichtigere Reglerparameter zu bestimmen.

Das fertigtrainierte neuronale Netz, bestehend aus 3 Eingangsneuronen, 4 Hiddenneuronen und 3 Ausgangsneuronen erzeugt daraus drei Ausgangsgrößen c, d und e, aus denen gemäß

$$K_p = 10^{c-A}$$

$$T_n = 10^{d-B}$$

$$T_v = 10^{e-B}$$

die gesuchten Reglerparameter berechnet werden können.

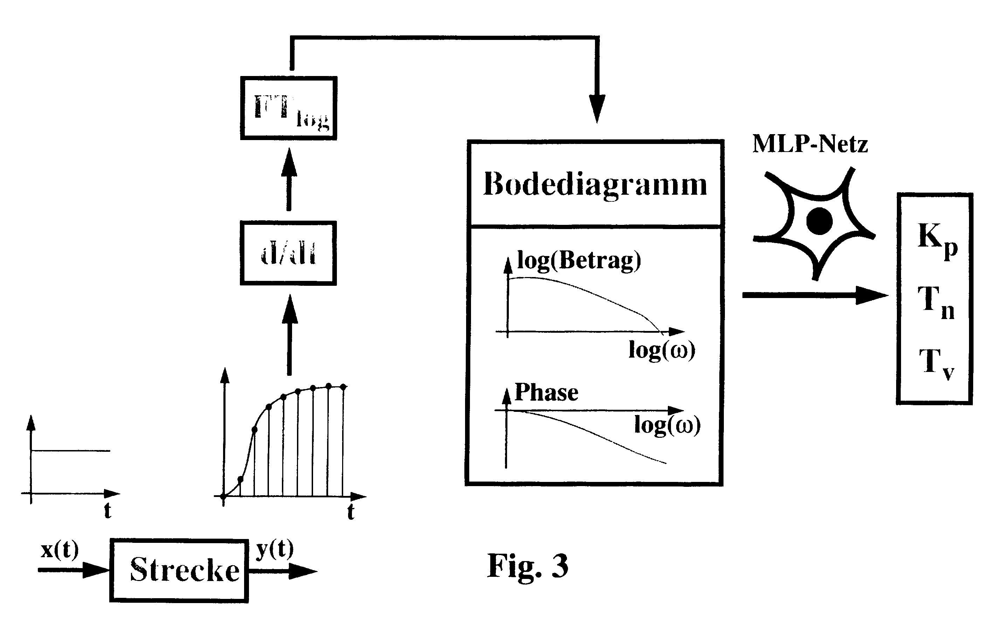

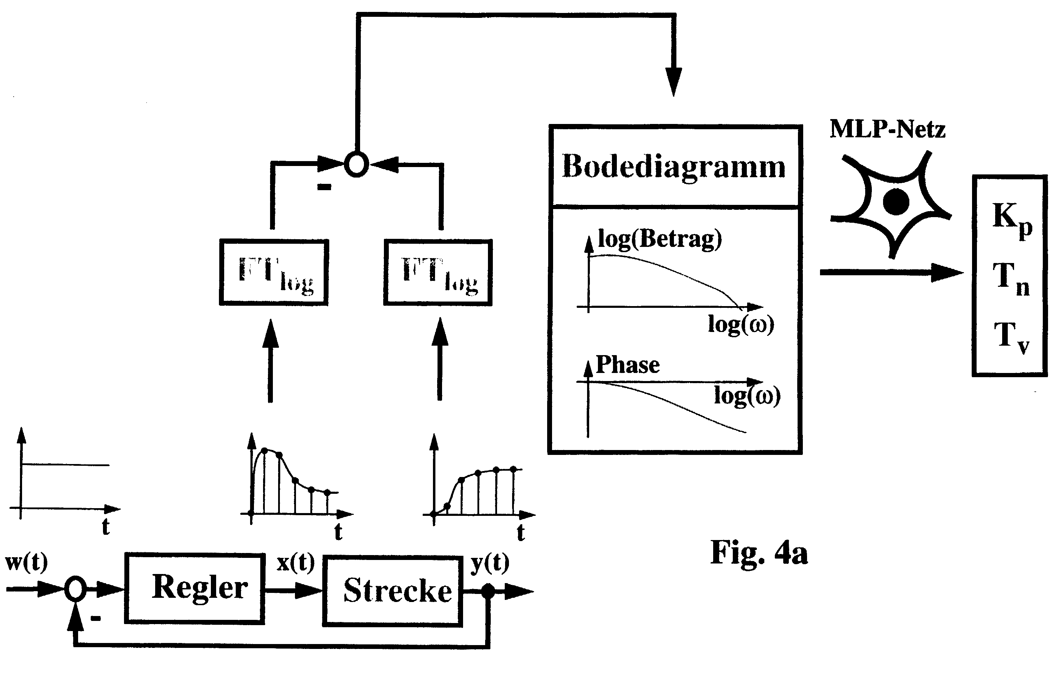

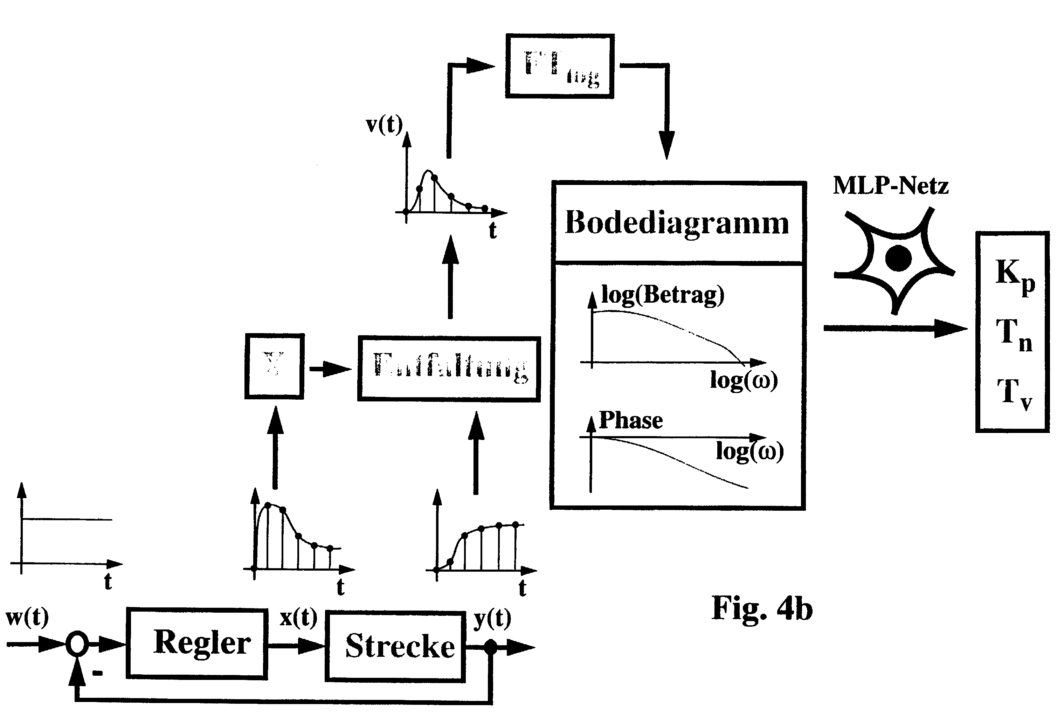

Die Schritte zur Berechnung der Frequenzkennlinien sollen anschließend anhand Fig. 3 und 4a, 4b erläutert werden: Zur Berechnung der Kennlinien im Bodediagramm kann wie Fig.3 zeigt von einer Regelstrecke ausgegangen werden, der ein Sprungsignal zuführbar ist (offener Regelkreis). Dann genügt es, nur die Sprungantwort zu messen, da das Sprungsignal bekannt ist.

Bei Regelkreisen z. B. in der Verfahrenstechnik ist es oft nicht möglich die Regelstrecke direkt anzusteuern. Dann kann z. B. dem geschlossenen Regelkreis das Sprungsignal zugeführt werden, um dann das Eingangssignal und das Antwortsignal der Regelstrecke zur Bestimmung der Frequenzkennlinien messen zu können. Ein Beispiel dafür ist Fig.4a und Fig. 4b zu entnehmen. In Fig 4a ist erkennbar, daß nach Transformation in den Frequenzbereich die Differenz der Frequenzgänge des Eingangssignales und des Antwortsignales gebildet wird und zur Erzeugung der Kennlinien verwendet wird. Die vorstehenden Erläuterungen betreffen die erste Methode.

In Fig. 4b ist erkennbar, daß für die zweite Methode die Impulsantwort durch eine Entfaltungsoperation berechnet wird, die vom Eingangssignal X(t) abhängt. Eine Glättung des Eingangs- und Antwortsignals ist dann nicht erforderlich. Durch die vorgestellte Entfaltungsmethode wird auch bei gestörter Messung eine glatte Impulsantwort abgegeben. Durch Fouriertransformation mit bekannten Methoden erhält man daraus das gesuchte Bodediagramm [3,4]

Literaturverzeichnis

[1] Otto Föllinger, Regelungstechnik, 5. Auflage, Hüttig-Verlag, Heidelberg 1985, S. 204-206

[2] John Hertz, Anders Krogh, Richard G. Palmer, Introduction to the Theory of Neural Computation, Addison-Wesley Publishing Company, 1991,S. 115-147

[3] H. Unbehauen, Regelungstechnik, 1989, S. 370-389

[4] R. Isermann, Identifikation dynamischer Systeme 1, Springer Verlag, 1989, S. 81-113

[5] WO 93/12476

[6] EP 0 520 233 A2

**Patentansprüche**

1. Verfahren zur Erzeugung der Reglerparameter aus einem Antwortsignal einer Regelstrecke durch einen Rechner,

- bei dem das Eingangssignal und das Antwortsignal abgetastet wird,
- bei dem das abgetastete Eingangssignal und Antwortsignal anhand eines zeitvarianten Filters geglättet oder anhand des zeitvarianten Filters geglättet und differenziert wird,
- bei dem jeweils die Frequenzkennlinien aus dem geglätteten oder geglätteten und differenzierten Eingangssignal und Antwortsignal erzeugt werden,
- bei dem eine Differenz der Frequenzkennlinien im Bodediagramm gebildet wird,
- bei dem anhand der Differenz die Reglerparameter ermittelt werden.

2. Verfahren zur Erzeugung der Reglerparameter aus einem Antwortsignal einer Regelstrecke durch einen Rechner,

- bei dem das Eingangssignal und das Antwortsignal abgetastet wird,
- bei dem aus dem abgetasteten Antwortsignal eine geglättete Impulsantwort durch Entfaltung des Antwortsignales bezüglich des Eingangssignals erzeugt wird,
- bei dem die Frequenzkennlinien im Bodediagramm aus der Impulsantwort gebildet werden,
- bei dem anhand der Frequenzkennlinien die Reglerparameter ermittelt werden.

3. Verfahren zur Erzeugung der Reglerparameter aus einem Antwortsignal einer Regelstrecke durch einen Rechner,

- bei dem das Antwortsignal abgetastet wird,
- bei dem das abgetastete Antwortsignal anhand eines zeitvarianten Filters geglättet oder anhand des zeitvarianten Filters geglättet und differenziert wird,
- bei die Frequenzkennlinien in einem Bodediagramm aus dem geglätteten oder geglätteten und differenzierten Antwortsignal erzeugt werden,
- bei dem anhand der Frequenzkennlinien die Reglerparameter ermittelt werden.

4. Verfahren nach Anspruch 1,2 oder 3,
bei dem die Entfaltung, Glättung oder Glättung und Differentiation des Eingangssignals oder Antwortsignals und die Erzeugung der Impulsantwort nach der Formel

$$\bar{x} = \underline{V} \underline{x}$$

$$\underline{v} = \underline{V}\underline{y}$$

erfolgt,
wobei y ein aus den Abtastwerten des Antwortsignals bestehender Vektor, $\underline{V}$ die Matrix zur Entfaltung oder Glättung oder Glättung und Differentiation, $\underline{v}$ der Vektor der geglätteten Impulsantwort, $\underline{x}$ der Vektor des Eingangssignals, $\underline{\bar{x}}$ der Vektor des geglätteten Eingangssignales bedeutet.

5. Verfahren nach Anspruch 4 in Verbindung mit Anspruch 2, bei dem die Entfaltungsmatrix aus einer Energiefunktion gewonnen wird, die einen Term aufweist, der die Abweichung der Approximation von dem gemessenen Antwortsignal angibt, und einen Term aufweist, der die Rauhigkeit der rekonstruierten Impulsantwort angibt.

6. Verfahren nach Anspruch 5,
bei dem die glättende Entfaltungsmatrix V durch Minimierung der folgenden Energiefunktion gewonnen wird:

$$\varepsilon(\underline{b}) = k\left(\left(\underline{y} - \underline{X}\underline{A}^3\underline{b}\right)^T \underline{D_0}\left(\underline{y} - \underline{X}\underline{A}^3\underline{b}\right) + \underline{v}^T\underline{D_1}\underline{v} + \underline{a}^T\underline{D_2}\underline{a} + \underline{r}^T\underline{D_3}\underline{r} + \underline{b}^T\underline{D_4}\underline{b}\right)$$

wobei

k eine Konstante, z. B. 0.5,
$\underline{X}$ eine Faltungsintegrationsmatrix ist, die in Abhängigkeit vom Eingangssignal x(t) berechnet wird,
$\underline{A}$ eine Integrationsmatrix ist,
$\underline{r}=\underline{A}\,\underline{b}$, $\underline{a}=\underline{A}\,\underline{r}$, $\underline{v}=\underline{A}\,\underline{a}$
und $\underline{D_0},\underline{D_1},\underline{D_2},\cdots\underline{D_4}$ beliebig wählbare Diagonalmatrizen sind, bei dem die Lösung dieser Minimierung

$$\underline{v} = \underline{V}\underline{y}$$

$$\underline{V} = \underline{A}^3 \left( \underline{A}^{3T} \underline{X}^T \underline{D}_0 \underline{X} \underline{A}^3 + \underline{A}^{3T} \underline{D}_1 \underline{A}^3 + \underline{A}^{2T} \underline{D}_2 \underline{A}^2 + \underline{A}^T \underline{D}_3 \underline{A} + \underline{D}_4 \right)^{-1} \underline{A}^{3T} \underline{X}^T \underline{D}_0$$

lautet.

**7.** Verfahren nach Anspruch 4 in Verbindung mit Anspruch 1, bei dem die Matrix $\underline{V}$ zur Glättung und Differentiation aus einer Energiefunktion gewonnen wird, die einen Term aufweist, der die Abweichung der Approximation von dem gemessenen Antwortsignal angibt, und einen Term aufweist, der die Rauhigkeit der rekonstruierten Impulsantwort angibt.

**8.** Verfahren nach Anspruch 7,
bei dem die Matrix V zur Glättung oder Glättung und Differentiation die folgende Fassung hat:

$$\underline{V} = \underline{A}^3 \left( \underline{A}^{4T} \underline{D}_0 \underline{A}^4 + \underline{A}^{3T} \underline{D}_1 \underline{A}^3 + \underline{A}^{2T} \underline{D}_2 \underline{A}^2 + \underline{A}^T \underline{D}_3 \underline{A} + \underline{D}_4 \right)^{-1} \underline{A}^{4T} \underline{D}_0$$

wobei

$\underline{D}_1 \cdots \underline{D}_4$ eine beliebig wählbare Diagonalmatrix,
$\underline{A}$ eine Integrationsmatrix,
T die Transponierung

bedeutet.

**9.** Verfahren nach Anspruch 4 in Verbindung mit Anspruch 3, bei dem die Matrix $\underline{V}$ zur Glättung und Differentiation aus einer Energiefunktion gewonnen wird, die einen Term aufweist, der die Abweichung der Approximation von dem gemessenen Antwortsignal angibt, und einen Term aufweist, der die Rauhigkeit der rekonstruierten Impulsantwort angibt.

**10.** Verfahren nach Anspruch 9,
bei dem die Glättungsmatrix oder Glättungs -und Diferentiationsmatrix aus der Energiefunktion

$$\varepsilon(\underline{a}) = k \left[ \left( \underline{y} - \underline{A}^2 \underline{a} \right)^T \left( \underline{y} - \underline{A}^2 \underline{a} \right) + \underline{a}^T \underline{D} \underline{a} \right]$$

gewonnen wird, wobei der erste Term die Abweichung der Approximation von dem gemessenen Antwortsignal, der zweite Term die Rauhigkeit der Approximation, $\underline{s} = \underline{A}\underline{v}, \underline{v} = \underline{A}\underline{a}$, und $\underline{s} = \underline{A}^2\underline{a}$ gilt, $\underline{D}$ eine Diagonalmatrix und A eine Integrationsmatrix und k eine Konstante, z. B. 0.5 ist.

**11.** Verfahren nach Anspruch 9,
bei dem die Glättungsmatrix oder Glättungs-und Differentiationsmatrix aus der Energiefunktion

$$\varepsilon(\underline{b}) = k \left[ \left( \underline{y} - \underline{A}^4 \underline{b} \right)^T \underline{D}_0 \left( \underline{y} - \underline{A}^4 \underline{b} \right) + \underline{v}^T \underline{D}_1 \underline{v} + \underline{a}^T \underline{D}_2 \underline{a} + \underline{r}^T \underline{D}_3 \underline{r} + \underline{b}^T \underline{D}_4 \underline{b} \right]$$

gewonnen wird, wobei $\underline{D}_1 \cdots \underline{D}$ Diagonalmatrizen sind, $\underline{A}$ eine Integrationsmatrix ist und

$$\underline{s} = \underline{A}\,\underline{v}$$

$$\underline{v} = \underline{A}\,\underline{a}$$

$$\underline{a} = \underline{A}\,\underline{r}$$

$$\underline{r} = \underline{A}\,\underline{b}$$

gilt.

**12.** Verfahren nach einem der vorhergehenden Ansprüche, bei dem das Bodediagramm bezüglich der Frequenz normiert wird.

**13.** Verfahren nach Anspruch 12,
bei dem die Normierung auf die Frequenz erfolgt, bei der die Phasenkennlinie $-\phi_N$ annimmt.

**14.** Verfahren nach einem der vorhergehenden Ansprüche, bei dem die Kennlinien des Bodediagramms nach der Methode der Approximation einer Sprungantwort oder einer Impulsantwort durch einen Polygonzug oder durch Rechteckblöcke und die Transformation in den Frequenzbereich mittels elementarer Korrespondenzen erfolgt.

**15.** Verfahren nach Anspruch 14,
bei dem für die Approximation des Frequenzganges gilt:

$$H(j\omega) \cong \sum_{\nu=1}^{q} h[\nu - 1] H_{\nu}(j\omega) \cong \frac{1}{(q-1)T} \sum_{\nu=1}^{q} v_{\nu} H_{\nu}(j\omega)$$

**16.** Verfahren nach Anspruch 15,
bei dem die Approximation des Frequenzganges gewonnen wird aus dem Vektor y durch

$$\underline{f} \cong \frac{1}{(q-1)T} \underline{H}\underline{V}\underline{y}$$

wobei

$$\underline{H} = \left[ \underline{h}_1 \, \underline{h}_2 \cdots \underline{h}_m \right]^T$$

und

$$\left[ H(j\omega_1) H(j\omega_2) \cdots H(j\omega_m) \right] \cong \frac{1}{(q-1)T} \underline{v}^T \left[ \underline{h}_1 \, \underline{h}_2 \cdots \underline{h}_m \right]$$

gilt.

**17.** System zur adaptiven Einstellung eines PID-Reglers mit Hilfe eines neuronalen Netzes nach dem Verfahren nach einem der Ansprüche 4, 7, 8, 12-16,

- bei dem erste Mittel zur Abtastung eines von einer Regelstrecke aufgrund eines zugeführten Eingangssignals abgegebenen Antwortsignals vorgesehen sind,
- bei dem jeweils Transformationsmittel (M) vorgesehen sind, durch die das Eingangssignal als auch das Antwortsignal (SA) geglättet , ggf. differenziert, und in den Frequenzbereich transformiert wird,
- bei dem zur Erzeugung des Bodediagramms der Strecke aus den Frequenzkennlinien des Eingangssignals und Antwortsignals im Bodediagramm die Differenz gebildet wird,
- bei dem das Bodediagramm, sowohl die Betragskennlinie als auch die Phasenkennlinie, am neuronalen Netz direkt oder nach Umsetzung als Eingangswerte anliegt,

EP 0 879 447 B1

- bei dem das neuronale Netz Parameter zur Einstellung des Reglers abgibt.

**18.** System zur adaptiven Einstellung eines PID-Reglers mit Hilfe eines neuronalen Netzes nach dem Verfahrens nach einem der Ansprüche 4-6, 12-16,

- bei dem erste Mittel zur Abtastung eines von einer Regelstrecke aufgrund eines zugeführten Eingangssignals abgegebenen Antwortsignals vorgesehen sind,
- bei dem Entfaltungsmittel vorgesehen sind, durch die aus dem Antwortsignal in Abhängigkeit vom Eingangssignal die geglättete Impulsantwort berechnet wird,
- bei dem zweite Mittel zur Gewinnung des Bodediagramms der Strecke aus der geglätteten Impulsantwort vorgesehen sind,
- bei dem das Bodediagramm, sowohl die Betragskennlinie als auch die Phasenkennlinie, am neuronalen Netz direkt oder nach Umsetzung als Eingangswerte anliegt,
- bei dem das neuronale Netz Parameter zur Einstellung des Reglers abgibt.

**19.** System zur adaptiven Einstellung eines PID-Reglers mit Hilfe eines neuronalen Netzes nach dem Verfahren nach einem der Ansprüche 4,9,12-16,

- bei dem erste Mittel zur Abtastung einer von einer Regelstrecke aufgrund eines zugeführten Eingangssignals abgegebenen Antwortsignal vorgesehen sind,
- bei dem Transformationsmittel (M) vorgesehen sind, durch die das das Antwortsignal (SA) geglättet , ggf. differenziert, und in den Frequenzbereich transformiert wird,
- bei dem zweite Mittel zur Erzeugung des Bodediagramms aus dem geglätteten Antwortsignal vorgesehen sind,
- bei dem das Bodediagramm, sowohl die Betragskennlinie als auch die Phasenkennlinie, am neuronalen Netz direkt oder nach Umsetzung als Eingangswerte anliegt,
- bei dem das neuronale Netz Parameter zur Einstellung des Reglers abgibt.

**20.** System nach Anspruch 17, 18 oder 19,
bei dem eine Normierungseinheit (NE) zur Normierung des Bodediagramms bezüglich der Frequenz vorgesehen ist.

**Claims**

1. Method for generating the control parameters from a response signal of a controlled system by means of a computer,

   - in which the input signal and the response signal are sampled,
   - in which the sampled input signal and response signal are smoothed with the aid of a time-variant filter or are smoothed and differentiated with the aid of the time-variant filter,
   - in which in each case the frequency characteristics are generated from the smoothed or smoothed and differentiated input signal and response signal,
   - in which a difference is formed between the frequency characteristics in the Bode diagram, and - in which the control parameters are determined with the aid of the difference.

2. Method for generating the control parameters from a response signal of a controlled system by means of a computer,

   - in which the input signal and the response signal are sampled,
   - in which a smoothed impulse response is generated from the sampled response signal by deconvolution of the response signal with respect to the input signal,
   - in which the frequency characteristics in the Bode diagram are formed from the impulse response, and
   - in which the control parameters are determined with the aid of the frequency characteristics.

3. Method for generating the control parameters from a response signal of a controlled system by means of a computer,

   - in which the response signal is sampled,

14

- in which the sampled response signal is smoothed with the aid of a time-variant filter or smoothed and differentiated with the aid of the time-variant filter,
- in which the frequency characteristics are generated in a Bode diagram from the smoothed or smoothed and differentiated response signal, and
- in- which the control parameters are determined with the aid of the frequency characteristics.

4. Method according to Claim 1, 2 or 3, in which the deconvolution, smoothing or smoothing and differentiation of the input signal or response signal and the generation of the impulse response are performed in accordance with the formula:

$$\bar{x} = \underline{V}\,\underline{x}$$

$$\underline{v} = \underline{V}\underline{y},$$

y signifying a vector consisting of the samples of the response signal, $\underline{V}$ the matrix for deconvolution or smoothing or smoothing and differentiation, $\underline{v}$ the vector of the smoothed impulse response, $\underline{x}$ the vector of the input signal, and $\underline{x}$ the vector of the smoothed input signal.

5. Method according to Claim 4 in conjunction with Claim 2, in which the deconvolution matrix is obtained from an energy function which has a term which specifies the deviation of the approximation from the measured response signal, and has a term which specifies the roughness of the reconstructed impulse response.

6. Method according to Claim 5, in which the smoothing deconvolution matrix $\underline{V}$ is obtained by minimizing the following energy function:

$$\varepsilon(\underline{b}) = k\left(\left(\underline{y} - \underline{X}\underline{A}^3\underline{b}\right)^T \underline{D}_0\left(\underline{y} - \underline{X}\underline{A}^3\underline{b}\right) + \underline{v}^T\underline{D}_1\underline{v} + \underline{a}^T\underline{D}_2\underline{a} + \underline{r}^T\underline{D}_3\underline{r} + \underline{b}^T\underline{D}_4\underline{b}\right)$$

k being a constant, for example 0.5,
$\underline{X}$ being a convolution integration matrix which is calculated as a function of the input signal x(t),
$\underline{A}$ being an integration matrix,
$\underline{r}=\underline{A}\,\underline{b},\ \underline{a}=\underline{A}\,\underline{r},\ \underline{v}=\underline{A}\,\underline{a},$
and $\underline{D}_0, \underline{D}_1, \underline{D}_2,\ldots\underline{D}_4$ being arbitrarily selectable diagonal matrices in which the solution of this minimization

$$\underline{v}=\underline{V}\underline{y}$$

$$\underline{V} = \underline{A}^3\left(\underline{A}^{3T}\underline{X}^T\underline{D}_0\underline{X}\underline{A}^3 + \underline{A}^{3T}\underline{D}_1\underline{A}^3 + \underline{A}^{2T}\underline{D}_2\underline{A}^2 + \underline{A}^T\underline{D}_3\underline{A} + \underline{D}_4\right)^{-1}\underline{A}^{3T}\underline{X}^T\underline{D}_0$$

7. Method according to Claim 4 in conjunction with Claim 1, in which the matrix $\underline{V}$ for smoothing and differentiation is obtained from an energy function which has a term which specifies the deviation of the approximation from the measured response signal, and has a term which specifies the roughness of the reconstructed impulse response.

8. Method according to Claim 7, in which the matrix $\underline{V}$ for smoothing or smoothing and differentiation has the following version:

$$\underline{V} = \underline{A}^3\left(\underline{A}^{4T}\underline{D}_0\underline{A}^4 + \underline{A}^{3T}\underline{D}_1\underline{A}^3 + \underline{A}^{2T}\underline{D}_2\underline{A}^2 + \underline{A}^T\underline{D}_3\underline{A} + \underline{D}_4\right)^{-1}\underline{A}^{4T}\underline{D}_0$$

$\underline{D}_1\ldots\underline{D}_4$ signifying an arbitrarily selectable diagonal matrix,
$\underline{A}$ signifying an integration matrix,
T signifying the transposition.

9. Method according to Claim 4 in conjunction with Claim 3, in which the matrix $\underline{V}$ for smoothing and differentiation is obtained from an energy function which has a term which specifies the deviation of the approximation from the measured response signal and has a term which specifies the roughness of the reconstructed impulse response.

10. Method according to Claim 9, in which the smoothing matrix or smoothing and differentiation matrix is obtained from the energy function

$$\varepsilon(\underline{a}) = k\left[\left(\underline{y} - \underline{A}^2\underline{a}\right)^T\left(\underline{y} - \underline{A}^2\underline{a}\right) + \underline{a}^T\underline{D}\underline{a}\right]$$

the first term being the deviation of the approximation from the measured response signal, the second term being the roughness of the approximation, $s = \underline{A}\,\underline{v}$, $\underline{v} = \underline{A}\,\underline{a}$, and $\underline{s} = \underline{A}^2\underline{a}$ holding, D being a diagonal matrix and $\underline{A}$ being an integration matrix and k being a constant, for example 0.5.

11. Method according to Claim 9, in which the smoothing matrix or smoothing and differentiation matrix is obtained from the energy function

$$\varepsilon(\underline{b}) = k\left[\left(\underline{y} - \underline{A}^4\underline{b}\right)^T\underline{D}_0\left(\underline{y} - \underline{A}^4\underline{b}\right) + \underline{v}^T\underline{D}_1\,\underline{v} + \underline{a}^T\underline{D}_2\,\underline{a} + \underline{r}^T\underline{D}_3\,\underline{r} + \underline{b}^T\underline{D}_4\,\underline{b}\right]$$

$\underline{D}_1 \ldots \underline{D}$ being diagonal matrices, $\underline{A}$ being an integration matrix, and

$$\underline{s} = \underline{A}\,\underline{v}$$

$$\underline{v} = \underline{A}\,\underline{a}$$

$$\underline{a} = \underline{A}\underline{r}$$

$$\underline{r} = \underline{A}\,\underline{b}$$

holding.

12. Method according to one of the preceding claims, in which the Bode diagram is normalized with respect to frequency.

13. Method according to Claim 12, in which the normalization is performed to the frequency at which the phase characteristic assumes a value - $\Phi_N$.

14. Method according to one of the preceding claims, in which the characteristics of the Bode diagram are generated in accordance with the method of approximating a step response or an impulse response by means of a polygon or by means of rectangular blocks, and the transformation into the frequency band is performed by means of elementary correspondences.

15. Method according to Claim 14, in which it holds for the approximation of the frequency response that:

$$H(j\omega) \equiv \sum_{v=1}^{q} h[v-1]H_v(j\omega) \equiv \frac{1}{(q-1)T} \sum_{v=1}^{q} v_v H_v(j\omega)$$

16. Method according to Claim 15, in which the approximation of the frequency response is obtained from the vector y by means of

$$\underline{f} \equiv \frac{1}{(q-1)T} \underline{HVy}$$

$$\underline{H} = [\underline{h}_1 \underline{h}_2 \cdots \underline{h}_m]^T$$

and

$$[H(j\omega_1)H(j\omega_2) \cdots H(j\omega_m)] \cong \frac{1}{(q-1)T} \underline{v}^T[\underline{h}_1 \underline{h}_2 \cdots \underline{h}_m]$$

holding.

17. System for adaptive setting of a PID controller with the aid of a neural network by the method according to one of Claims 4, 7, 8, 12-16,

   - in which first means are provided for sampling a response signal emitted by a control system on the basis of a fed input signal,
   - in which in each case transformation means (M) are provided by means of which the input signal and also the response signal (SA) are smoothed, possibly differentiated, and transformed into the frequency band,
   - in which for the purpose of generating the Bode diagram of the system, the difference is formed between the frequency characteristics of the input signal and response signal in the Bode diagram,
   - in which the Bode diagram, both the absolute value characteristic and the phase characteristic, is present on the neural network directly or after conversion as input values, and
   - in which the neural network emits parameters for setting the controller.

18. System for adaptive setting of a PID controller with the aid of a neural network by the method according to one of Claims 4-6, 12-16,

   - in which first means are provided for sampling a response signal emitted by a control system on the basis of a fed input signal,
   - in which deconvolution means are provided by means of which the smoothed impulse response is calculated from the response signal as a function of the input signal,
   - in which second means are provided for obtaining the Bode diagram of the system from the smoothed impulse response,
   - in which the Bode diagram, both the absolute value characteristic and the phase characteristic, is present on the neural network directly or after conversion as input values, and
   - in which the neural network emits parameters for setting the controller.

19. System for adaptive setting of a PID controller with the aid of a neural network by the method according to one of Claims 4, 9, 12-16,

   - in which first means are provided for sampling a response signal emitted by a control system on the basis of a fed input signal,
   - in which transformation means (M) are provided by means of which the response signal (SA) is smoothed, possibly differentiated, and transformed into the frequency band,

- in which second means are provided for generating the Bode diagram from the smoothed response signal,
- in which the Bode diagram, both the absolute value characteristic and the phase characteristic, is present on the neural network directly or after conversion as input values, and
- in which the neural network emits parameters for setting the controller.

**20.** System according to Claim 17, 18 or 19, in which a normalization unit (NE) is provided for normalizing the Bode diagram with respect to the frequency.

**Revendications**

**1.** Procédé d'obtention de paramètres de réglage à partir d'un signal de réponse d'un système commandé au moyen d'un calculateur,

- dans lequel le signal d'entrée et le signal de réponse sont analysés,
- dans lequel le signal d'entrée et le signal de réponse analysés sont lissés au moyen d'un filtre variable en temps ou sont lissés et différentiés au moyen du filtre variable en temps,
- dans lequel les courbes caractéristiques de fréquence sont produites, à chaque fois, à partir du signal d'entrée et du signal de réponse lissés ou lissés et différentiés,
- dans lequel on forme une différence des courbes caractéristiques de fréquence dans le diagramme de Bode,
- dans lequel on détermine les paramètres de réglage en se basant sur la différence.

**2.** Procédé d'obtention de paramètres de réglage à partir d'un signal de réponse d'un système commandé au moyen d'un calculateur,

- dans lequel le signal d'entrée et le signal de réponse sont analysés,
- dans lequel on produit, à partir du signal de réponse analysé, une réponse lissée impulsionnelle par déconvolution du signal de réponse par rapport au signal d'entrée,
- dans lequel les courbes caractéristiques de fréquence dans le diagramme de Bode sont formées à partir de la réponse impulsionnelle,
- dans lequel on détermine les paramètres de réglage en se basant sur les courbes caractéristiques de fréquence.

**3.** Procédé d'obtention de paramètres de réglage à partir d'un signal de réponse d'un système commandé au moyen d'un calculateur,

- dans lequel le signal de réponse est analysé,
- dans lequel le signal de réponse analysé est lissé au moyen d'un filtre variable en temps ou est lissé et différentié au moyen du filtre variable en temps,
- dans lequel les courbes caractéristiques de fréquence sont produites dans un diagramme de Bode à partir du signal de réponse lissé ou lissé et différentié,
- dans lequel on détermine les paramètres de réglage en se basant sur les courbes caractéristiques de fréquence.

**4.** Procédé selon l'une des revendications 1, 2 ou 3, dans lequel la déconvolution, le lissage ou le lissage et la différentiation du signal d'entrée ou signal de réponse et l'obtention de la réponse impulsionnelle se font suivant la formule

$$\tilde{x} = \underline{V}\ \underline{x}$$

$$\underline{v} = \underline{V}\ \underline{y}$$

$\tilde{x}$        y signifiant un vecteur formé par les valeurs d'analyse du signal de réponse, $\underline{V}$ la matrice pour la déconvolution ou le lissage ou le lissage et la différentiation, v le vecteur de la réponse impulsionnelle lissée, $\underline{x}$ le vecteur du signal d'entrée, $\tilde{x}$ le vecteur du signal d'entrée lissé.

**5.** Procédé selon la revendication 4 en liaison avec la revendication 2, dans lequel la matrice de déconvolution est obtenue à partir d'une fonction d'énergie qui comprend un terme indiquant l'écart entre l'approximation et le signal de réponse mesuré et comprend un terme indiquant l'irrégularité de la réponse impulsionnelle restituée.

**6.** Procédé selon la revendication 5, dans lequel la matrice de déconvolution lissante $\underline{V}$ est obtenue par minimisation de la fonction d'énergie suivante :

$$\varepsilon(\underline{b}) = k\left(\left(\underline{y} - \underline{X}\underline{A}^3\underline{b}\right)^T \underline{D}_0\left(\underline{y} - \underline{X}\underline{A}^3\underline{b}\right) + \underline{v}^T\underline{D}_1\underline{v} + \underline{a}^T\underline{D}_2\underline{a} + \underline{r}^T\underline{D}_3\underline{r} + \underline{b}^T\underline{D}_4\underline{b}\right)$$

où

 k est une constante, par exemple 0,5,
 $\underline{X}$ est une matrice d'intégration de convolution qui est calculée en fonction du signal d'entrée x(t),
 $\underline{A}$ est une matrice d'intégration,
 $\underline{r} = \underline{A}\,\underline{b}$, $\underline{a} = \underline{A}\,\underline{r}$, $\underline{v} = \underline{A}\,\underline{a}$
 et $\underline{D}_0$, $\underline{D}_1$, $\underline{D}_2$,..., $\underline{D}_4$ sont des matrices diagonales pouvant être choisies de manière quelconque,

dans lequel la solution de cette minimisation est

$$\underline{v} = \underline{V}\underline{y}$$

$$\underline{V} = \underline{A}^3\left(\underline{A}^{3T}\underline{X}^T\underline{D}_0\underline{X}\underline{A}^3 + \underline{A}^{3T}\underline{D}_1\underline{A}^3 + \underline{A}^{2T}\underline{D}_2\underline{A}^2 + \underline{A}^T\underline{D}_3\underline{A} + \underline{D}_4\right)^{-1}\underline{A}^{3T}\underline{X}^T\underline{D}_0.$$

**7.** Procédé selon la revendication 4 en liaison avec la revendication 1, dans lequel la matrice $\underline{V}$ pour le lissage et la différentiation est obtenue à partir d'une fonction d'énergie qui comprend un terme indiquant l'écart entre l'approximation et le signal de réponse mesuré et comprend un terme indiquant l'irrégularité de la réponse impulsionnelle restituée.

**8.** Procédé selon la revendication 7, dans lequel la matrice $\underline{V}$ pour le lissage ou le lissage et la différentiation est formulée de la manière suivante :

$$\underline{V} = \underline{A}^3\left(\underline{A}^{4T}\underline{D}_0\underline{A}^4 + \underline{A}^{3T}\underline{D}_1\underline{A}^3 + \underline{A}^{2T}\underline{D}_2\underline{A}^2 + \underline{A}^T\underline{D}_3\underline{A} + \underline{D}_4\right)^{-1}\underline{A}^{4T}\underline{D}_0,$$

 $\underline{D}_1$,..., $\underline{D}_4$ signifiant une matrice diagonale pouvant être choisie de manière quelconque,
 $\underline{A}$ une matrice d'intégration,
 T la transposition.

**9.** Procédé selon la revendication 4 en liaison avec la revendication 3, dans lequel la matrice $\underline{V}$ pour le lissage et la différentiation est obtenue à partir d'une fonction d'énergie qui comprend un terme indiquant l'écart entre l'approximation et le signal de réponse mesuré et comprend un terme indiquant l'irrégularité de la réponse impulsionnelle restituée.

**10.** Procédé selon la revendication 9, dans lequel la matrice de lissage ou matrice de lissage et de différentiation est obtenue à partir de la fonction d'énergie

$$\varepsilon(\underline{a}) = k\left[\left(\underline{y} - \underline{A}^2\underline{a}\right)^T\left(\underline{y} - \underline{A}^2\underline{a}\right) + \underline{a}^T\underline{D}\underline{a}\right],$$

le premier terme indiquant l'écart entre l'approximation et le signal de réponse mesuré, le second terme indiquant l'irrégularité de l'approximation, $\underline{s} = \underline{A}\,\underline{v}$, $\underline{v} = \underline{A}\,\underline{a}$ et $\underline{s} = \underline{A}^2\underline{a}$, $\underline{D}$ étant une matrice diagonale, $\underline{A}$ une matrice d'intégration et k une constante, par exemple 0,5.

**11.** Procédé selon la revendication 9, dans lequel la matrice de lissage ou matrice de lissage et de différentiation est obtenue à partir de la fonction d'énergie

$$\varepsilon(\underline{b}) = k\left[\left(\underline{y} - \underline{A}^4\underline{b}\right)^T\underline{D}_0\left(\underline{y} - \underline{A}^4\underline{b}\right) + \underline{v}^T\underline{D}_1\underline{v} + \underline{a}^T\underline{D}_2\underline{a} + \underline{r}^T\underline{D}_3\underline{r} + \underline{b}^T\underline{D}_4\underline{b}\right]$$

$\underline{D}_1, ..., \underline{D}$ étant des matrices diagonales, $\underline{A}$ une matrice d'intégration et les égalités

$$\underline{s} = \underline{A}\,\underline{v}$$

$$\underline{v} = \underline{A}\,\underline{a}$$

$$\underline{a} = \underline{A}\,\underline{r}$$

$$\underline{r} = \underline{A}\,\underline{b}$$

étant vérifiées.

**12.** Procédé selon l'une des revendications précédentes, dans lequel le diagramme de Bode est normalisé par rapport à la fréquence.

**13.** Procédé selon la revendication 12, dans lequel la normalisation intervient au niveau de la fréquence à laquelle la courbe caractéristique de phase prend la valeur $-\Phi_N$.

**14.** Procédé selon l'une des revendications précédentes, dans lequel les caractéristiques du diagramme de Bode sont formées selon la méthode de l'approximation d'une réponse à un échelon ou d'une réponse impulsionnelle par un tracé polygonal ou par des blocs rectangulaires et la transformation en la gamme de fréquences se fait au moyen de correspondances élémentaires.

**15.** Procédé selon la revendication 14, dans lequel, pour l'approximation de la réponse fréquentielle, la formule

$$H(j\omega) \cong \sum_{\nu=1}^{q} h[\nu - 1]\, H\nu(j\omega) \cong \frac{1}{(q-1)T} \sum_{\nu=1}^{q} v_\nu H_\nu(j\omega)$$

est vérifiée.

**16.** Procédé selon la revendication 15, dans lequel l'approximation de la réponse fréquentielle est obtenue à partir du vecteur y par la formule

$$\underline{f} \cong \frac{1}{(q-1)T}\,\underline{H}\underline{V}\underline{y},$$

où

$$\underline{H} = \left[\underline{h}_1\underline{h}_2\cdots\underline{h}_m\right]^{\mathsf{T}}$$

et la formule

$$\left[H(j\omega_1)H(j\omega_2)\cdots H(j\omega_m)\right] \cong \frac{1}{(q-1)T}\ \underline{v}^{\mathsf{T}}\left[\underline{h}_1\underline{h}_2\cdots\underline{h}_m\right]$$

étant vérifiée.

**17.** Système pour le réglage adaptatif d'un régulateur PID à l'aide d'un réseau neuronal d'après le procédé selon l'une des revendications 4, 7, 8, 12-16,

- dans lequel on prévoit des premiers moyens d'analyse d'un signal de réponse délivré par un système commandé sur la base d'un signal d'entrée amené,
- dans lequel on prévoit à chaque fois des moyens de transformation (M) grâce auxquels le signal d'entrée et le signal de réponse (SA) sont lissés, le cas échéant différentiés, et transformés en la gamme de fréquences,
- dans lequel, pour obtenir le diagramme de Bode du système commandé, on forme la différence des courbes caractéristiques de fréquence du signal d'entrée et du signal de réponse dans le diagramme de Bode,
- dans lequel le diagramme de Bode - non seulement la courbe caractéristique de valeur mais également la courbe caractéristique de phase - est appliqué au réseau neuronal, directement ou après conversion, en tant que valeurs d'entrée,
- dans lequel le réseau neuronal délivre des paramètres destinés au réglage du régulateur.

**18.** Système pour le réglage adaptatif d'un régulateur PID à l'aide d'un réseau neuronal d'après le procédé selon l'une des revendications 4-6, 12-16,

- dans lequel on prévoit des premiers moyens d'analyse d'un signal de réponse délivré par un système commandé sur la base d'un signal d'entrée amené,
- dans lequel on prévoit des moyens de déconvolution grâce auxquels on évalue la réponse impulsionnelle lissée à partir du signal de réponse en fonction du signal d'entrée,
- dans lequel on prévoit des seconds moyens permettant d'obtenir le diagramme de Bode du système commandé à partir de la réponse impulsionnelle lissée,
- dans lequel le diagramme de Bode - non seulement la courbe caractéristique de valeur mais également la courbe caractéristique de phase - est appliqué au réseau neuronal, directement ou après conversion, en tant que valeurs d'entrée,
- dans lequel le réseau neuronal délivre des paramètres destinés au réglage du régulateur.

**19.** Système pour le réglage adaptatif d'un régulateur PID à l'aide d'un réseau neuronal d'après le procédé selon l'une des revendications 4, 9, 12-16,

- dans lequel on prévoit des premiers moyens d'analyse d'un signal de réponse délivré par un système commandé sur la base d'un signal d'entrée amené,
- dans lequel on prévoit des moyens de transformation (M) grâce auxquels le signal de réponse (SA) est lissé, le cas échéant différentié, et transformé en la gamme de fréquences,
- dans lequel on prévoit des seconds moyens permettant d'obtenir le diagramme de Bode à partir du signal de réponse lissé,
- dans lequel le diagramme de Bode - non seulement la courbe caractéristique de valeur mais également la courbe caractéristique de phase - est appliqué au réseau neuronal, directement ou après conversion, en tant que valeurs d'entrée,
- dans lequel le réseau neuronal délivre des paramètres destinés au réglage du régulateur.

**20.** Système selon l'une des revendications 17, 18 ou 19, dans lequel on prévoit une unité de normalisation (NE) pour normaliser le diagramme de Bode par rapport à la fréquence.

Fig. 1

Fig. 2

Fig. 3

EP 0 879 447 B1

Fig. 4a

**Fig. 4b**

EP 0 879 447 B1

# FIG 5

FIG 6

FIG 7